# EUROPÄISCHE PATENTANMELDUNG

(11) **EP 0 855 684 A2**
(43) Veröffentlichungstag der Anmeldung: **29.07.1998**
(21) Anmeldenummer: 98250009.2
(22) Anmeldetag: 12.01.1998
(51) Int. Cl.: G07C 3/00

(54) **Verfahren zur Erfassung des Ist-Zustandes eines Behälters, insbesondere Composite-Druckgasbehälter für Fahrzeuge**

(30) Priorität: 23.01.1997 DE 19703709
(71) Anmelder: MANNESMANN Aktiengesellschaft, 40213 Düsseldorf (DE)
(72) Erfinder: Rasche, Christian, Dr-.Ing., 44892 Bochum (DE); Kulgemeyer, Axel, Dr.-Ing., 47829 Krefeld (DE); Junker, Gerd, Dipl.-Ing., 40883 Ratingen (DE)
(74) Vertreter: Presting, Hans-Joachim, Dipl.-Ing.

(57) **Zusammenfassung**

Die Erfindung betrifft ein Verfahren zur Erfassung des Ist-Zustandes im Hinblick auf eine Alterung eines Behälters, insbesondere Composite-Druckgasbehälter für Fahrzeuge, der in bestimmten Zyklen mit einem unter Druck stehenden Gas befüllt und entleert und je nach Ist-Zustand einer wiederkehrenden amtlichen Bauteilprüfung unterzogen wird. Erfindungsgemäß ist vorgesehen, daß zum einen die Amplitude der Druckzyklen, d. h. die Höhe des Befülldruckes minus dem Restdruck vor dem nächsten Befüllvorgang als auch die Temperaturzyklen, d. h. die Max.- und Min.-Temperaturen innerhalb eines vorgegebenen Zyklus meßtechnisch erfaßt und mittels eines geeigneten Rechenprogrammes daraus die wahre mechanische Alterung des Behälters berechnet wird, wobei zusätzlich überkritische Dehnungen in Umfangs- und / oder Längsrichtung dieses Behälters erfaßt und bei der Berechnung der wahren mechanischen Alterung mitberücksichtigt werden.

## Beschreibung

Die Erfindung betrifft ein Verfahren zur Erfassung des Ist-Zustandes im Hinblick auf eine Alterung eines Behälters, insbesondere Composite-Druckgasbehälter für Fahrzeuge gemäß dem Oberbegriff des Patentanspruches 1.

Composite-Druckgasbehälter zeichnen sich gegenüber monolithischen Druckgasbehältern aus Stahl oder Aluminium durch ein wesentlich geringeres Gewicht aus. Die Gewichtsreduzierung resultiert aus der Substitution metallischer Wanddickenanteile der Kernbehälter durch spezifisch festere Faserverbundwerkstoffe. Je nach technischem Konzept - Umfangswicklung oder Vollumwicklung - Wahl des Linerwerkstoffes - Stahl, Aluminium und deren Legierung, oder Kunststoff - und des Faserverbundwerkstoffes können Gewichtsreduzierungen von bis zu 80 % realisiert werden.

Die geringe Masse der Behälter führt zwangsläufig zu vielen Anwendungen, in denen das geringere Gewicht von entscheidender Bedeutung ist. Diese Anwendungen können z. B. der Gasetransport auf Trailern oder die Speichereinheit in gasbetriebenen Fahrzeugen etc. sein. In diesen Fahrzeugen sind die Composite-Druckgasbehälter fest montiert und untereinander bzw. mit einer Sammelleitung verrohrt. Die Einzelkomponenten sind in der Regel erstmalig geprüft. Am Gesamtsystem wird vor der Inbetriebnahme eine Dichtheitsprüfung durchgeführt.

Die beispielsweise nach TRG 765 (Richtlinie für die wiederkehrende Prüfung von Druckgasen durch den Sachverständigen) vorgeschriebene wiederkehrende Prüfung bedeutet für den Betreiber einen hohen Prüfaufwand. Weitaus höhere Kosten erzeugen allerdings die Stillstandzeiten der Fahrzeuge. Eine Variante zwecks Reduzierung der Stillstandzeiten wäre die Bereitstellung von bereits geprüften Ersatzsystemen im Austausch. Problematisch sind hier allerdings die zum Teil zahlreichen Speichertypen, die ein Austauschverfahren aus wirtschaftlichen Gesichtspunkten nicht effektiv erscheinen lassen. Es wäre deshalb wünschenswert, in bestimmten Zeitabständen den Ist-Zustand des Behälters abfragen zu können, um dadurch den Umfang der wiederkehrenden Prüfungen reduzieren oder den Zeitpunkt der Durchführung weiter hinausschieben zu können. Unbefriedigend ist in jedem Fall die Festlegung starrer zeitlicher Zyklen zur Durchführung der wiederkehrenden Prüfung ohne die tatsächliche aufgetretene Belastung mitzuberücksichtigen.

Aus der GB 2103801 A ist ein Verfahren bekannt, bei dem durch Messung des Druckes und der Temperatur des geförderten Fluids die zu erwartende Lebensdauer einer das Fluid fördernden Rohrleitung ermittelt wird. Die Messung erfolgt in bestimmten Zeitabständen an mehreren Stellen entlang der Leitung. Erfaßt wird der aktuelle Druck bei Förderung des Fluids, der in eine Umfangsspannung umgerechnet wird und mittels dieses Meßwertes ein Parameter in einem Tabellenwerk abgegriffen wird. Der Parameter wird zusammen mit der aktuell gemessenen Temperatur und einer Konstanten in eine Gleichung eingesetzt und daraus die zu erwartende Lebensdauer ermittelt. Da die Gleichung von Annahmen ausgeht, die nur teilweise ermittelbar und meßbar sind, kann der errechnete Wert nur eine Abschätzung sein. Für eine akute Schadensfallvorhersage ist diese Methode nicht geeignet. Außerdem werden die Druckzyklen nicht berücksichtigt und zusätzlich auftretende überkritische Dehnungen werden nicht erfaßt.

Aufgabe der vorliegenden Erfindung ist es, ein Verfahren zur Erfassung des IST-Zustandes eines Behälters, insbesondere eines Composite-Druckgasbehälters zu entwickeln, um den Umfang der wiederkehrenden Prüfung zu reduzieren oder die Festlegung des Zeitpunktes der Durchführung von den tatsächlichen Belastungen abhängig zu machen.

Diese Aufgabe wird mit den Merkmalen des Patentanspruches 1 gelöst. Vorteilhafte Weiterbildungen sind Bestandteil von Unteransprüchen.

Beim Life-Time-Monitoring werden die Amplituden der Druckzyklen, also die Höhe des Befüllungsdruckes sowie der Betriebsüberdruck des Behälters unmittelbar vor dem nächsten Befüllungsvorgang wie auch die Temperaturzyklen -max. und min. Temperatur beispielsweise innerhalb von 24 h-Zyklen - z. B. in einem Datenlogger erfaßt. Ggf. kann die im Fahrzeug integrierte Elektronik, wie z. B. das in Kommunalbussen häufig vorzufindende "IBIS" (Integriertes Bus Informationssystem), dazu herangezogen werden. Eine Auswertung dieser Daten erfolgt mit Hilfe einer in der genannten Elektronik integrierten Software. Diese Software beinhaltet die Berechnung der aktuellen wahren mechanischen Alterung der Druckgasbehälter beispielsweise nach AD-Merkblatt S2 oder anderen geeigneten Berechnungsmethoden der Ermüdungsfestigkeit. Darüber hinaus werden die thermisch induzierten Spannungen in den einzelnen Werkstoffkomponenten in der "On-Line" durchgeführten Festigkeitsanalyse mit berücksichtigt. Betriebstemperaturüberschreitungen und -unterschreitungen können ebenfalls dokumentiert und bewertet werden. Eine unzulässige Betriebstemperatur ist auch dann für einen Schadensfall von Bedeutung, wenn die am Behälter angebrachten Sicherheitssysteme wie Berstscheibe oder Schmelzlot infolge einer unzulässig hohen Betriebstemperatur aktiv werden.

Bei Überschreiten einer von einer Sachverständigenorganisation festgelegten mechanischen Alterung wird die Notwendigkeit der wiederkehrenden Prüfung im Cockpit des Fahrzeuges signalisiert. Dieses hat den Vorteil, daß die wiederkehrende Prüfung nicht, entsprechend einem Querverweis in der TRG 765 auf die TRG Reihe 100 (allgemeine Bestimmungen für Druckgase), nach einer bestimmten Betriebszeit durchgeführt werden muß, sondern auf Basis der berechneten wahren Alterung und damit eine technisch sinnvollere Lösung darstellt. Die Festlegung der wahren Alterung, nach der eine wiederkehrende Prüfung durchzuführen ist, kann relativ einfach mit der üblichen wiederkehrenden Prüffrist und ausgelegter Lebensdauer, in der Regel 20 Jahre berechnet werden. Diese Möglichkeit bietet den Vorteil, daß jeder Behälter entsprechend seiner wahren Betriebsbeanspruchung geprüft wird. Oft gefüllte Behälter werden demzufolge in kürzeren Fristen geprüft. Kaum beanspruchte Behälter werden entsprechend längere Prüffristen haben. Im Fall langer statischer Innendruckbeanspruchung kann ggf. ein weiterer Abminderungsfaktor zwecks Berücksichtigung der Zeitstandbeanspruchung für Liner und Faserverbundwerkstoff eingeführt werden.

Mit einer zusätzlichen Sensorik werden ggf. überkritische Dehnungen erfaßt und unmittelbar im Cockpit angezeigt. Diese Sensoren, die wiederum mit der genannten Elektronik im Cockpit der Fahrzeuge gekoppelt sind, können spezielle Dehnungsmeßstreifen oder elektrisch leitende Elemente wie z. B. einzelne Kohlenstoffasern oder andere elektrische Leiter sein. Im Fall eines jeden individuellen Behälter-Designs zu definierenden überkritischen Dehnung in Umfangs- oder Längsrichtung des Behälters, wird diese durch die Sensorik oder durch die Dehnungsmeßstreifen erfaßt und unmittelbar im Cockpit angezeigt. Zusätzlich kann im Leitungssystem der Gasspeichereinheit oder in dem Ventil bzw. Stopfen des Composite-Druckgasbehälters eine hygrometische Meßvorrichtung zwecks Bestimmung der Taupunkttemperatur vorgesehen werden. Aufgrund der Qualität bzw. des Feuchtegehaltes des zugeführten Gases können dann Rückschlüsse über die Beschaffenheit der Innenoberfläche der Behälter gezogen werden. Im Fall einer Füllung mit feuchtem Gas mit der Folge von Korrosion an der Innenoberfläche der Liner durch Kondensatabscheidung würde dies sofort von der Meßvorrichtung angezeigt. Alternativ kann für die Taupunktbestimmung bei der wiederkehrenden Prüfung lediglich eine Vorrichtung konstruktiv in der Gasspeichereinheit oder an den Behältern vorgesehen werden, um die Taupunktbestimmung lediglich bei der wiederkehrenden Prüfung durchführen zu können.

Mit den beschriebenen Methoden ist eine On-line Überwachung möglich, mit der die wiederkehrende Prüfung vereinfacht und / oder gegenüber den üblichen wiederkehrenden Prüffristen zu einem späteren Zeitpunkt durchgeführt werden kann.

Für eine genauere Untersuchung der Gasspeichereinheit kann zusätzlich die Schallemissionsanalyse (SEA) während der Befüllung der Druckgasbehälter auf dem Fahrzeug durchgeführt werden.

Mit der SEA ist es möglich, Rißbildungen und Rißwachstum sowie plastische Verformungen im Liner und Faserverbundwerkstoff zu detektieren und bei entsprechendem Aufwand zu lokalisieren. Gegenüber der konventionellen Flüssigkeitsdruckprobe liegt damit ein mehr als vergleichbares Verfahren vor, da mit der Flüssigkeitsdruckprobe lediglich die Dichtheit bei Prüfdruck und ggf. eine größere plastische Verformung in einem monolithischen Stahl-Behälter nachgewiesen werden kann.

Für die Durchführung der SEA ist die Kenntnis der Befüllungszyklen von entscheidender Bedeutung, da der Gasdruck für die Prüfung deutlich über dem Befüllungsdruck liegen muß, um eine Schädigung nachweisen zu können.

Die während der Befüllung gemessene Schallemission wird mit der sogenannten Mutterkurve -Charakteristisches Frequenzbild, Amplitudenhöhe, Anzahl und Art der Schallereignisse in Abhängigkeit vom Druck für individuellen Behältertyp bzw. Bauweise - verglichen. Im Fall einer guten Prüfung werden die Daten zwecks Schaffung von Speicherkapazität sofort wieder gelöscht. Im Fall einer schlechten Prüfung bleiben die Daten gespeichert und die schlechte Prüfung wird angezeigt.

Eine Alternative besteht darin, während der Befüllung neben dem Hochdruckschlauch ein weiteres Kabel in der Tankklappe zusätzlich anzuschließen, um die Daten der SEA an einen externen Rechner weiterzuleiten. Bei dieser Variante ist allerdings dafür Sorge zu tragen, daß die Daten mit Hilfe eines vorgeschalteten Identifikationssignals eindeutig dem jeweiligen Fahrzeug zugeordnet werden kann. Desweiteren müssen im Fall mehrerer Gastankstellen / Betriebshöfe die einzelnen Rechner untereinander verknüpft sein, um die vollständige Aufbereitung aller Daten sicherzustellen.

## Patentansprüche

1. Verfahren zur Erfassung des Ist-Zustandes im Hinblick auf eine Alterung eines Behälters, insbesondere Composite-Druckgasbehälter für Fahrzeuge, der in bestimmten Zyklen mit einem unter Druck stehenden Gas befüllt und entleert und je nach Ist-Zustand einer wiederkehrenden amtlichen Bauteilprüfung unterzogen wird,
dadurch gekennzeichnet,
daß zum einen die Amplitude der Druckzyklen, d. h. die Höhe des Befülldruckes minus dem Restdruck vor dem nächsten Befüllvorgang als auch die Temperaturzyklen, d. h. die Max.- und Min.-Temperaturen innerhalb eines vorgegebenen Zyklus meßtechnisch erfaßt und mittels eines geeigneten Rechenprogrammes daraus die wahre mechanische Alterung des Behälters berechnet wird, wobei zusätzlich überkritische Dehnungen in Umfangs- und / oder Längsrichtung dieses Behälters erfaßt und bei der Berechnung der wahren mechanischen Alterung mitberücksichtigt werden.

2. Verfahren nach Anspruch 1,
dadurch gekennzeichnet,
daß das im Fahrzeug bereits vorhandene Informations- und Auswertesystem für die Bewertung der anfallenden Meßdaten herangezogen wird und die Anzeige im Cockpit des Fahrzeuges erfolgt.

3. Verfahren nach Anspruch 1 oder 2,
dadurch gekennzeichnet,
daß während der Befüllung mittels einer hygrometrischen Meßvorrichtung der Feuchtegehalt des zugeführten Gases bestimmt wird.

4. Verfahren nach einem der Ansprüche 1 - 3,
dadurch gekennzeichnet,
daß während der Befüllung der einzelne Behälter einer Schallemissionsanalyse unterzogen wird und die vor Inbetriebnahme des Behälters erstellte Mutterkurve mit der bei der Messung anfallenden Kurve im Hinblick auf Frequenzbild, Amplitudenhöhe, Anzahl und Art der Schallereignisse in Abhängigkeit vom Druck verglichen wird.

5. Verfahren nach Anspruch 4,
dadurch gekennzeichnet,
daß die Meßdaten der durchgeführten Schallemissionsanalyse an einen externen Rechner zur weiteren Datenaufbereitung weitergeleitet werden und bei Prüfung mehrerer gleichartiger Behälter jedem Meßdatensatz ein Identifikationssignal zur eindeutigen Zuordnung des Datensatzes sowie zum jeweiligen Behälter vorgeschaltet wird.
